# EUROPEAN PATENT SPECIFICATION

(11) **EP 1 292 812 B1**
(45) Date of publication and mention of the grant of the patent: **03.06.2009**
(21) Application number: 01934063.7
(22) Date of filing: 16.05.2001
(51) Int. Cl.: G01M 13/00

(54) **METHOD IN MONITORING THE CONDITION OF MACHINES**
VERFAHREN ZUR ÜBERWACHUNG DES ZUSTANDS VON MASCHINEN
METHODE DE CONTROLE DE L'ETAT DE MACHINES

(30) Priority: 22.05.2000 FI 20001217
(43) Date of publication of application: 19.03.2003
(73) Proprietor: Procla Oy, 08100 Lohja (FI)
(72) Inventor: LUMME,Veli Erkki, Nero Research Oy, 33210 Tampere (FI); SEPPÄ, Juha, 33720 Tampere (FI)
(74) Representative: Helino, Timo Kalervo
(86) International application number: PCT/FI2001/000480
(87) International publication number: WO 2001/090713

(56) References cited:
- DE-A1- 4 406 723
- US-A- 4 435 770
- US-A- 5 329 465
- US-A- 6 041 287

## Description

The present invention relates to a method in monitoring the condition of machines, in which method quantities descriptive of the operation and condition of machines are measured from a number of substantially identical machines. In the context of the present application, the term 'machine' is used in a broad sense to refer to various individual power engines, motors, generators, pumps, fans, compressors, aggregates of machinery and equipment consisting of different components, various processes etc., i.e. in general to refer to different mechanical, hydraulic, pneumatic, electric or chemical drives and functions whose properties and changes of properties can be described and measured in terms of physical and chemical quantities.

Faults appearing in machines are generally diagnosed on the basis of a deviation detected in the condition of the machine by monitoring. The deviation may be a change of a characteristic or symptom or a combination of symptoms, i.e. a syndrome relating to the operation or condition of the machine from a reference value. When the structure and operational states of the machine being monitored and the symptoms produced are known, it will be possible to chart potential fault alternatives. Certain faults correspond to certain syndromes, in which a given symptom should be present or a given symptom may be present or a given symptom should not be present. The mutual relationships between symptoms also have a great importance. In the fault diagnosis, fault alternatives that are out of the question in the light of the above-mentioned circumstances are excluded. The probability of the remaining faults is also estimated by using additional information that may be collected. The reference values used to detect the deviation have been empirical values or they have been based on measured values previously collected from the same point e.g. in accordance with the PSK 5705 standard.

However, estimating the condition of an individual machine is difficult because the reference material needed for the reference values is generally deficient. The amount of existing measured data regarding the condition of the machine is scant especially at the initial phase and such data is not available in all operational states of the machine. Therefore, the determination of the deviation cannot be based on history data, but general information has to be utilized instead. Although this kind of information is available for individual symptoms, no such information is available for syndromes. Consequently, the determination of a deviation is uncertain and inaccurate.

The absence of empiric data is a special disadvantage in the identification of faults. In practice, identification of faults at present is based on known rules, which have been published e.g. in the PSK 5707 standard. In many cases, the rules are of a general nature and are not based on measured values obtained from the machine in question and on symptoms separated from them. Finnish patent application 102857 discloses a method whereby a system can be made to learn from measurement results. However, the problem is that, in order to perform a fault diagnosis, an individual machine must first experience all the faults that the system is expected to identify. This is not possible in practice.

US patent 6,041,287 discloses monitoring and diagnosing the condition of machines by comparing measured data sets with data in a lookup table. However, a situation where a measured data set does not correspond to a data set in the lookup table is not foreseen.

For the reasons described above, automatic diagnosing systems have not gained ground. This is also one of the reasons why no viable remote diagnostics systems have been developed so far. Even if some kind of systems of this type do exist, they are only capable of solving simple diagnosing tasks based on using a single symptom, but they are unable to handle syndromes.

Industrial establishments are not always willing to make sufficient investments on the equipment and personnel needed for monitoring the condition of machines. On the other hand, due to reasons of both personnel policy and information security of the enterprise, it is undesirable to let outsiders enter factories and production plants to provide condition monitoring services. In addition, as the availability of condition monitoring services is poor, the quality of service varies, delivery or diagnoses takes time, the results of diagnoses are often obscure and their presentation non-uniform, it is understandable that such services are not widely used and are not very profitable, either.

The profitability is also primarily dependent on the expenses resulting from the distance between the client and the service provider. In consequence of the above-mentioned circumstances, servicing and repairs of machines are only undertaken after a damage has already occurred. Yet, via timely servicing and optimized anticipation of maintenance needs, it would be possible to achieve significant savings in repair costs and above all in interruption costs resulting from unscheduled shutdowns.

The object of the invention is to eliminate the above-mentioned disadvantages. A specific object of the invention is to disclose a new type of method for collecting and comparing existing data and new data to be collected, by which method measurement results obtained from different machines can be utilized widely in the entire system, yet without revealing information concerning the operation of individual machines to other parties belonging to the system. Thus, the object of the invention is to enable a method which is capable of serving an unlimited clientele and in which measurement data are collected from the clients into one or more common databases where individual measured data items fade away and merge, forming a data bank based on wide experience and expertise made available to all.

As for the features characteristic of the invention, reference is made to the claims.

In the method of the invention, measurements are preferably performed on a maximal number of preferably but not necessarily identical machines or machines of substantially the same type to obtain quantities descriptive of the operation and condition of the machines. According to the invention, characteristics or symptoms related to the operation or condition of the machine concerned are derived from the measured quantities. These characteristics may be either directly measured quantities or properties separated, derived or calculated from these quantities, characteristics such as e.g. speed of rotation, temperature, pressure, intensity of radiation, frequency and amplitude of vibration, a given frequency band of vibration, changes in quantities and rates of change, and so on.

After this, a characteristic vector, i.e. a syndrome descriptive of the current operational state of the machine concerned is formed from the characteristics. From characteristic vectors describing the same operational state, characteristic vector categories are formed so that in each characteristic vector category each characteristic has an allowed range of variation. The characteristic vector categories describing different operational states of the machines are stored to form a database.

To examine the operation of an individual machine, a characteristic vector descriptive of its current operational state is formed from the quantities measured from it and the characteristic vector is compared to the database, which contains stored characteristic vector categories describing different operational states of corresponding machines. If the characteristic vector being compared corresponds to a characteristic vector describing a state of malfunction, then an alarm is activated. Similarly, an alarm is activated if no characteristic vector category corresponding to this characteristic vector can be found in the database, because in this case the machine being examined is in a completely new and unknown operational state, which has to be immediately analyzed to establish whether it is a normal and acceptable state or a new state of malfunction.

The essential point about the use and functionality of the method of the invention is that the database used should be as large as possible and contain characteristic vectors descriptive of different operational states of the machines in question in as large an area of application as possible. Therefore, preferably every new characteristic vector to be compared in the method is stored in the existing database.

The characteristic vector to be compared preferably corresponds to a certain characteristic vector category if all characteristics of the characteristic vector are within the allowed range of variation of the characteristics in the characteristic vector category. The allowed range of variation of a characteristic may be defined by the measured highest and lowest values of the characteristic in the characteristic vector category concerned. However, the range of variation may also be determined e.g. via computation either from the maximum and minimum values of the characteristic or e.g. from all values of the characteristic in question. Thus, the allowed value of the characteristic may vary beyond the existing maximum and minimum values, or the allowed range of variation of the characteristic may even be considerably narrower than the range defined by the maximum and minimum values.

If the characteristic vector being compared corresponds to a characteristic vector category describing a known state of malfunction that already exists in the database, then an alarm, e.g. a service advice, is issued to the attendant of the machine or to another person in charge. In a case where the database used does not contain a characteristic vector category corresponding to the measured characteristic vector, then, according to the method of the invention, an alarm is issued to an expert organization or an individual specialist maintaining the database, who, having examined the new operational state thus detected, makes a decision regarding possible further alarms.

Having received the alarm and examined the new characteristic vector and the corresponding new operational state of the machine, the specialist may add the characteristic vector he has examined to a characteristic vector category already existing in the database if it is found that the new operational state corresponds to a given known operational state of the machine. In this case, the allowed ranges of variation of the characteristics in the characteristic vector category concerned are expanded appropriately to cover this new characteristic vector as well.

It is also possible that the new operational state and the corresponding characteristic vector are really new, in which case the specialist can create a new characteristic vector category on the basis of the characteristic vector he is examining. This is done e.g. by collecting a number of new characteristic vectors from the novelty situation, and when their number is large enough, a new characteristic vector category with a specific allowed range of variation can be generated. According to the interpretation given by the specialist, the category corresponding to the new operational state can be assigned a name and possible alarms can be defined for it.

In an embodiment of the invention, the characteristic vectors are generated by a computer connected to the machine to be monitored and having a communication connection, such as e.g. an Internet connection with a server maintaining the database. Another possibility is to have the characteristic vectors generated by the server maintaining the database, by transmitting the measurement results to the server via a communication link, such as an Internet connection.

In the method of the invention, preferably automatic communication connections are used so that e.g. in the case of a novelty the server maintaining the database automatically sends an e-mail or GSM short message to authorized specialists. The latter can establish a connection e.g. using an Internet browser with the server, which has automatically generated a new page containing the data relating to the novelty situation. By using their own expertise or previous experience or in other appropriate ways, the specialists perform a fault diagnosis and give a statement about the condition of the machine to the server, which automatically informs the client about this via an e-mail or GSM short message.

The method of the invention has significant advantages as compared with prior art. By this method, measurement results obtained from an individual machine can be utilized in all machines belonging to the same system and in their condition monitoring without revealing any data regarding individual machines, even competitors' corresponding machines, to the users of the system. Thus, the method provides reliable reference values for deviations of the condition of each machine and allows the faults of each machine as well as the development of the faults to be reliably monitored. Accordingly, the servicing and maintenance of the machines can be planned on a long-span basis avoiding unexpected failures of machines and shutdowns while maximizing the maintenance intervals.

In the method of the invention, the client can at any time establish a connection from his own computer e.g. using an Internet browser to the server maintaining the database. Thus, in a conjointly agreed manner, the client is able to gain an overall idea of the condition of the machines in his own plants. If the client so wishes, he can also get additional information e.g. about the development of measured values or about the statements given by specialists. The method is not bound to time and location, so it can be used globally independently of territorial borders, traffic connections, weather conditions and times of day.

By using protection and password techniques, it can be ensured that the clients will only see information pertaining to themselves. If necessary, it is naturally possible to provide a temporary possibility to use outside experts who may possess better know-how regarding a particular machine or the solution of a particular problem.

In the following, the invention will be described in detail with reference to the attached drawings, wherein
Fig. 1 presents a diagram representing a method according to the invention,
Fig. 2 presents a diagram representing a second method according to the invention,
Fig. 3 presents a diagram representing a third method according to the invention, and
Fig. 4 presents a diagram representing a fourth method according to the invention.

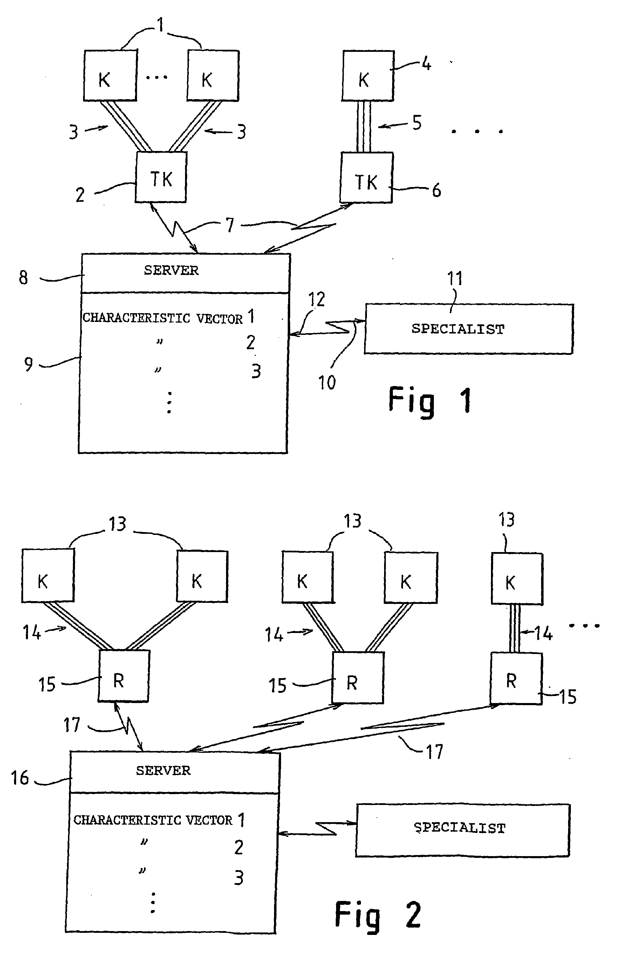

Fig. 1 illustrates a method according to the invention in which a number of machines 1 are connected to a computer 2 via measuring links 3. The computer 2 is measuring continuously or is at least continuously connected via the measuring links 3 to the machines 1 to be monitored. In a corresponding manner, a machine 4 like machines 1 is connected via a measuring link 5 to another computer 6. Both computers 2 and 6 communicate e.g. via an Internet connection with a server 8 which maintains a database 9 used in the method of the invention.

The database 9 consists of characteristic vector categories describing different operational states of the machines. A characteristic vector category again consists of a given characteristic vector and the allowed ranges of variation of the characteristics comprised in it. In addition, in the system presented in Fig. 1, the server 8 communicates when necessary e.g. via GSM or e-mail with a specialist 11, who in turn may communicate with the server 8 e.g. via an Internet connection.

In this way, in the method according to the invention illustrated in Fig. 1, measurements are performed on the machines 1 and 4 to obtain measured data relating to their condition and operation, and the data thus obtained is transferred via the links 3 and 5 to the computers 2 and 6. Using software provided in the computers, characteristics associated with the condition and operation of the machine, i.e. symptoms which together form a characteristic vector, i.e. a syndrome describing the operation of the machine in the current operational state, are separated from the measured data. This characteristic vector is transferred via an Internet connection 7 from the computers into the database in the common server 8 used to store characteristic vectors for similar machines.

Once a sufficient number of characteristic vectors from different clients have been collected on the server 8, they can be used as a basis to generate characteristic vector categories describing different operational states. For each category, minimum and maximum values of symptoms typical of the operational state in question are automatically formed, these values together defining the allowed ranges of variation.

When the database on the server 8 is sufficiently large, each new characteristic vector sent from a computer 2 or 6 to the server 8 can be compared to the collected measurement material by searching the material to find the characteristic vector category that shows the closest correspondence to it. If all characteristics of the new characteristic vector are within the ranges of variation of the category thus found, then the new characteristic vector is similar to the other samples in the same category and therefore known. If any one of the characteristics of the new characteristic vector is outside the range of variation, then the new characteristic vector contains novelty properties that distinguish it from the other samples which otherwise belong to the same category. These novelty properties may be related to the emergence of a fault in the machine being monitored.

In the case of a novelty like this, the server 8 automatically sends an e-mail or GSM short message 10 to an authorized specialist 11. The specialist establishes a connection 12 with the server 8 and examines the characteristic vector corresponding to the novelty situation that has appeared. In this way, the specialist adds the new characteristic vector being examined to the database on the server 8 either by including it in an old characteristic vector category or by collecting a sufficient number of new characteristic vectors from the novelty situation and adding them to the database, whereupon it will be possible to create from this sufficient amount of new data a characteristic vector category corresponding to this new operational state. In accordance with the interpretation given by the specialist 11, the category corresponding to the new operational state can be assigned a name and the necessary alarms. The next time when a characteristic vector corresponding to the operational state in question appears, the category corresponding to it will be found immediately and an appropriate notice about it will be given to the specialist 11 or the client.

Fig. 2 illustrates a second method according to the invention, in which similar machines 13 to be monitored are connected via measuring links 14 to routers 15, in which case no computers connected to the machines 13 are needed for the generation and transmission of the characteristic vectors. Thus, the server 16 can directly establish a connection with the router 15 over the Internet 17 and receive the measurement results, whereupon the server 16 carries out the required processing of the measurement results, i.e. separation of characteristics. In other respects, the method represented by Fig. 2 corresponds to the method described with reference to Fig. 1.

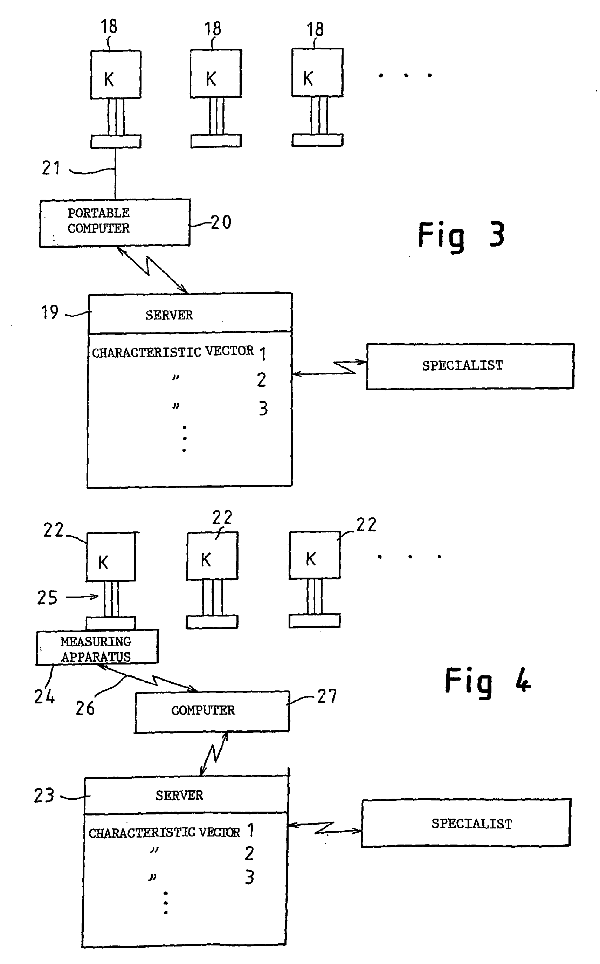

Fig. 3 illustrates a third embodiment of the invention, in which the identical machines 18 to be monitored are not continuously connected via fixed links to a server 19. Instead, this method employs a portable computer 20 which can be alternatively and optionally connected via a measuring link 21 each time to a different machine. The portable computer 20 then communicates with the server 19 and the database maintained by it in the manner described above. In this way, by the method illustrated in Fig. 3, a single portable computer can be used to examine a large number of separate machines 18 or aggregates of machines according to the need in each case or at suitable intervals. In other respects, the method represented by Fig. 3 corresponds to the method of Fig. 1.

Fig. 4 presents a fourth embodiment of the invention, in which the machines 22 to be monitored do not communicate with a server 23 via a continuous fixed connection. Instead, this method employs a portable measuring apparatus 24 which can be alternatively and optionally connected via a measuring link 25 each time to a different machine 22.

The portable measuring apparatus 24 communicates via a suitable communication connection 26 with a computer 27, which then communicates with the server 23 and the database maintained by it as described above. In this way, by the method illustrated in Fig. 4, a single portable measuring apparatus can be used to examine a large number of separate machines or aggregates of machines according to the need in each case or at suitable intervals. In other respects, the method represented by Fig. 4 corresponds to the method of Fig. 1.

In the foregoing, the invention has been described by way of example with reference to the attached drawings while different embodiments of the invention are possible within the inventive idea defined in the claims.

## Claims

1. Method in monitoring the condition of machines, in which method measurements are performed on a number of machines (1, 4, 13, 18, 22) or machine parts to obtain quantities descriptive of the condition of the machines (1, 4, 13, 18, 22)
- from the measured quantities, characteristics or symptoms related to the operation or condition of the machine (1, 4, 13, 18, 22) concerned are derived and/or the measured quantities are directly regarded as characteristics,
- from characteristics descriptive of the same operational state of the machine (1, 4, 13, 18, 22) a characteristic vector, i.e. syndrome describing the current operational state of the machine (1, 4, 13, 18, 22) is generated,
- from characteristic vectors describing the same operational state, characteristic vector categories are formed so that each characteristic in each characteristic vector category has an allowed range of variation,
- a database (9) is created in which are stored characteristic vector categories describing different operational states of the machines (1, 4, 13, 18, 22) together with the allowed ranges of variation of the characteristics,
- to analyze the operation of a machine (1, 4, 13, 18, 22) a characteristic vector describing its current operational state is generated from the quantities measured from it, and said characteristic vector is compared to the database (9) containing characteristic vector categories describing different operational states of machines (1, 4, 13, 18, 22), and
- an alarm is activated;
- if the characteristic vector being compared corresponds to a characteristic vector category describing an operational state requiring an alarm **characterized in that** an alarm is activated
- if no characteristic vector category corresponding to the characteristic vector can be found in the database (9), in which case
- the characteristic vector is added to a characteristic vector category existing in the database, thereby expanding the allowed ranges of variation of the characteristics in the characteristic vector category or
- a new characteristic vector category is generated on the basis of the characteristic vector. -

2. Method as defined in claim 1, **characterized in that** the allowed range of variation of a characteristic in a characteristic vector category is formed from the minimum and maximum values of the characteristic in the characteristic vector category concerned.

3. Method as defined in claim 1, **characterized in that** the allowed range of variation of a characteristic in a characteristic vector category is formed using a suitable algorithm from the maximum and minimum values of the characteristic in the characteristic vector category concerned.

4. Method as defined in claim 1, **characterized in that** the characteristic vector being compared corresponds to a certain characteristic vector category if the all characteristics of the characteristic vector are within the allowed range of variation of the characteristics in the characteristic vector category.

5. Method as defined in claim 1, **characterized in that** an alarm such as a service advice is issued to the attendant of the machine (1, 4, 13, 18, 22) concerned if the characteristic vector being compared corresponds to a characteristic vector category corresponding to a state of malfunction known in the database (9).

6. Method as defined in claim 1, **characterized in that** an alarm is issued to a specialist if no characteristic vector category corresponding to the characteristic vector is known in the database (9).

7. Method as defined in claim 6, **characterized in that** the specialist (11) adds the characteristic vector examined by him to a characteristic vector category existing in the database (9), thereby expanding the allowed ranges of variation of the characteristics in the characteristic vector category.

8. Method as defined in claim 6, **characterized in that** the specialist (11) generates a new characteristic vector category on the basis of the characteristic vector examined by him.

9. Method as defined in claim 1, **characterized in that** the characteristic vectors are generated from measurement results collected by means of a portable measuring apparatus (24) either in the measuring apparatus itself or using a computer (27) having a communication connection, such as an Internet connection, with the server (23) maintaining the database (9).

10. Method as defined in claim 1, **characterized in that** the characteristic vectors are generated on the server (8, 16, 19, 23) maintaining the database (9), the measurement results being transmitted to the server (8, 16, 19, 23) via a communication connection, such as an Internet connection.

11. Method as defined in claim 1, **characterized in that** the quantities are measured from a number of identical or substantially identical machines (18).

12. Method as defined in claim 1, **characterized in that** the quantities are measured from machines (1, 4, 13, 18, 22) whose locations and distances relative to each other are unlimited.

## Patentansprüche

1. Verfahren zur Überwachung des Zustands von Maschinen, bei welchem Verfahren Messungen an einer Anzahl von Maschinen (1, 4, 13, 18, 22) oder Maschinenteilen vorgenommen werden, um Größen zu erhalten, die für den Zustand der Maschinen (1, 4, 13, 18, 22) beschreibend sind, wobei
- Kenngrößen oder Anzeichen, die sich auf den Betrieb oder den Zustand der betreffenden Maschine (1, 4, 13, 18, 22) beziehen, aus den Messgrößen abgeleitet werden und/oder die Messgrößen direkt als Kenngrößen betrachtet werden,
- aus Kenngrößen, die für denselben Betriebszustand der Maschine (1, 4, 13, 18, 22) beschreibend sind, ein Kennwertvektor erzeugt wird, d.h. ein Anzeichen, weiches den momentanen Betriebszustand der Maschine (1, 4, 13, 18, 22) beschreibt,
- aus Kennwertvektoren, die denselben Betriebszustand beschreiben, Kennwertvektorkategorien gebildet werden, so dass jede Kenngröße in jeder Kennwertvektorkategorie einen zulässigen Schwankungsbereich hat,
- eine Datenbank (9) erzeugt wird, in der Kennwertvektorkategorien, die verschiedene Betriebszustände der Maschinen (1, 4, 13, 18, 22) beschreiben, zusammen mit den zulässigen Schwankungsbereichen der Kenngrößen abgespeichert sind,
- zur Analysierung des Betriebs einer Maschine (1, 4, 13, 18, 22) ein Kennwertvektor, der ihren momentanen Betriebszustand beschreibt, aus den an ihr gemessenen Größen erzeugt wird, und der Kennwertvektor mit der Datenbank (9) verglichen wird, die Kennwertvektorkategorien enthält, weiche verschiedene Betriebszustände von Maschinen (1, 4, 13, 18, 22) beschreiben und
- ein Alarm ausgelöst wird;
- wenn der verglichene Kennwertvektor einer Kennwertvektorkategorie entspricht, die einen Betriebszustand beschreibt, der einen Alarm erfordert,
**dadurch gekennzeichnet, dass** ein Alarm ausgelöst wird,
- wenn in der Datenbank (9) keine Kennwertvektorkategorie gefunden werden kann, die dem Kennwertvektor entspricht, in welchem Fall
- der Kennwertvektor einer Kennwertvektorkategorie zugeschlagen wird, die in der Datenbank existiert, wodurch die zulässigen Schwankungsbereiche der Kenngrößen in der Kennwertvektorkategorie erweitert werden oder
- auf der Grundlage des Kennwertvektors eine neue Kennwertvektorkategorie erzeugt wird.

2. Verfahren nach Anspruch 1, **dadurch gekennzeichnet, dass** der zulässige Schwankungsbereich einer Kenngröße in einer Kennwertvektorkategorie aus den Minimal- und Maximalwerten der Kenngröße in der betreffenden Kennwertvektorkategorie gebildet wird.

3. Verfahren nach Anspruch 1, **dadurch gekennzeichnet, dass** der zulässige Schwankungsbereich einer Kenngröße in einer Kennwertvektorkategorie unter Verwendung eines geeigneten Algorithmus aus den Maximal- und Minimalwerten der Kenngröße in der betreffenden Kennwertvektorkategorie gebildet wird.

4. Verfahren nach Anspruch 1, **dadurch gekennzeichnet, dass** der verglichene Kennwertvektor einer bestimmten Kennwertvektorkategorie entspricht, wenn alle Kenngrößen des Kennwertvektors sich innerhalb des zulässigen Schwankungsbereichs der Kenngrößen in der Kennwertvektorkategorie befinden.

5. Verfahren nach Anspruch 1, **dadurch gekennzeichnet, dass** an den Bediener der betreffenden Maschine (1, 4, 13, 18, 22) ein Alarm wie etwa eine Wartungsanweisung ausgegeben wird, wenn der verglichene Kennwertvektor einer in der Datenbank (9) bekannten Kennwertvektorkategorie entspricht, die einem Zustand einer Fehlfunktion entspricht.

6. Verfahren nach Anspruch 1, **dadurch gekennzeichnet, dass** an einen Fachmann ein Alarm ausgegeben wird, wenn in der Datenbank (9) keine Kennwertvektorkategorie bekannt ist, die dem Kennwertvektor entspricht.

7. Verfahren nach Anspruch 6, **dadurch gekennzeichnet, dass** der Fachmann (11) den von ihm untersuchten Kennwertvektor einer in der Datenbank (9) existierenden Kennwertvektorkategorie zuschlägt, wodurch die zulässigen Schwankungsbereiche der Kenngrößen in der Kennwertvektorkategorie erweitert werden.

8. Verfahren nach Anspruch 6, **dadurch gekennzeichnet, dass** der Fachmann (11) auf der Grundlage des von ihm untersuchten Kennwertvektors eine neue Kennwertvektorkategorie erzeugt.

9. Verfahren nach Anspruch 1, **dadurch gekennzeichnet, dass** die Kennwertvektoren aus Messergebnissen erzeugt werden, die mittels eines tragbaren Messgeräts (24) entweder im Messgerät selbst oder mittels eines Computers (27) mit einer Datenübertragungsverbindung wie z.B. einer Internet-Verbindung gesammelt werden, wobei der Server (23) die Datenbank (9) unterhält.

10. Verfahren nach Anspruch 1, **dadurch gekennzeichnet, dass** die Kennwertvektoren auf dem die Datenbank (9) unterhaltenden Server (8, 16, 19, 23) erzeugt werden, wobei die Messergebnisse über eine Datenübertragungsverbindung wie z.B. eine Internet-Verbindung auf den Server (8, 16, 19, 23) übertragen werden.

11. Verfahren nach Anspruch 1, **dadurch gekennzeichnet, dass** die Größen an einer Anzahl von Maschinen (18) gemessen werden, die identisch oder im Wesentlichen identisch sind.

12. Verfahren nach Anspruch 1, **dadurch gekennzeichnet, dass** die Größen an Maschinen (1, 4, 13, 18, 22) gemessen werden, deren Aufstellungsorte und Abstände zueinander unbegrenzt sind.

## Revendications

1. Procédé de surveillance de l'état de machines, dans lequel des mesures du procédé sont effectuées sur une pluralité de machines (1, 4, 13, 18, 22) ou de parties de machine pour obtenir des quantités descriptives de l'état des machines (1, 4, 13, 18, 22) qui
- à partir des quantités, caractéristiques ou symptômes mesurés relatifs au fonctionnement ou à l'état de la machine (1, 4, 13, 18, 22) concernée sont dérivées et/ou les quantités mesurées sont directement considérées comme des caractéristiques,
- à partir des caractéristiques descriptives du même état opérationnel de la machine (1, 4, 13, 18, 22) un vecteur caractéristique, c'est-à-dire un syndrome décrivant l'état opérationnel actuel de la machine (1, 4, 13, 18, 22) est généré,
- à partir des vecteurs caractéristiques décrivant le même état opérationnel, des catégories de vecteur caractéristique sont formées de sorte que chaque caractéristique dans chaque catégorie de vecteur caractéristique a une plage tolérée de variation,
- une base de données (9) est créée dans laquelle sont stockées des catégories de vecteur caractéristique décrivant différents états opérationnels des machines (1, 4, 13, 18, 22) conjointement avec les plages tolérées de variation des caractéristiques,
- pour analyser le fonctionnement d'une machine (1, 4, 13, 18, 22), un vecteur caractéristique décrivant son état opérationnel actuel est généré à partir des quantités mesurées de celle-ci, et ledit vecteur caractéristique est comparé à la base de données (9) contenant des catégories de vecteur caractéristiques décrivant différents états opérationnels de machines (1, 4, 13, 18, 22) et
- une alarme est activée ;
- si le vecteur caractéristique comparé correspond à une catégorie de vecteur caractéristique décrivant un état opérationnel nécessitant une alarme
**caractérisé en ce qu'**une alarme est activée
- si aucune catégorie de vecteur caractéristique correspondant au vecteur caractéristique ne peut être trouvée dans la base de données (9), auquel cas
- le vecteur caractéristique est ajouté à une catégorie de vecteur caractéristique existant dans la base de données, de manière à étendre les plages tolérées de variation des caractéristiques dans la catégorie de vecteur caractéristique ou
- une nouvelle catégorie de vecteur caractéristique est générée sur la base du vecteur caractéristique.

2. Procédé selon la revendication 1, **caractérisé en ce que** la plage tolérée de variation d'une caractéristique dans une catégorie de vecteur caractéristique est formée des valeurs minimale et maximale de la caractéristique dans la catégorie de vecteur caractéristique concernée.

3. Procédé selon la revendication 1, **caractérisé en ce que** la plage tolérée de variation d'une caractéristique dans une catégorie de vecteur caractéristique est formée en utilisant un algorithme adapté à partir des valeurs maximale et minimale de la caractéristique dans la catégorie de vecteur caractéristique concernée.

4. Procédé selon la revendication 1, **caractérisé en ce que** le vecteur caractéristique comparé correspond à une certaine catégorie de vecteur caractéristique si toutes les caractéristiques du vecteur caractéristique sont dans la plage de variation tolérée des caractéristiques dans la catégorie de vecteur caractéristique.

5. Procédé selon la revendication 1, **caractérisé en ce qu'**une alarme telle qu'un avertissement de maintenance est émis à l'opérateur de la machine (1, 4, 13, 18, 22) concernée si le vecteur caractéristique comparé correspond à une catégorie de vecteur caractéristique correspondant à un état de dysfonctionnement connu dans la base de données (9).

6. Procédé selon la revendication 1, **caractérisé en ce qu'**une alarme est transmise à un spécialiste si aucune catégorie de vecteur caractéristique correspondant au vecteur caractéristique n'est connue dans la base de données (9).

7. Procédé selon la revendication 6, **caractérisé en ce que** le spécialiste (11) ajoute le vecteur caractéristique examiné par lui à une catégorie de vecteur caractéristique existant dans la base de données (9) de manière à étendre les plages de variation tolérées des caractéristiques dans la catégorie de vecteur caractéristique.

8. Procédé selon la revendication 6, **caractérisé en ce que** le spécialiste (11) génère une nouvelle catégorie de vecteur caractéristique sur la base du vecteur caractéristique examiné par lui.

9. Procédé selon la revendication 1, **caractérisé en ce que** les vecteurs caractéristiques sont générés à partir de résultats de mesure collectés au moyen d'un appareil de mesure portable (24) dans l'appareil de mesure lui-même ou en utilisant un ordinateur (27) ayant une connexion de communication, telle qu'une connexion Internet, avec le serveur (23) maintenant la base de données (9).

10. Procédé selon la revendication 1, **caractérisé en ce que** les vecteurs caractéristiques sont générés sur le serveur (8, 16, 19, 23) maintenant la base de données (9), les résultats de mesure étant transmis au serveur (8, 16, 19, 23) via une connexion de communication, telle qu'une connexion Internet.

11. Procédé selon la revendication 1, **caractérisé en ce que** les quantités sont mesurées à partir d'une pluralité de machines identiques ou sensiblement identiques (18).

12. Procédé selon la revendication 1, **caractérisé en ce que** les quantités sont mesurées à partir de machines (1, 4, 13, 18, 22) dont les emplacements et les distances les unes par rapport aux autres sont illimités.
